# EUROPEAN PATENT SPECIFICATION

(11) **EP 1 905 518 B1**
(45) Date of publication and mention of the grant of the patent: **25.06.2014**
(21) Application number: 07019192.9
(22) Date of filing: 28.09.2007
(51) Int. Cl.: B05D 7/16, F16J 15/08, F02F 11/00

(54) **Gasket material and production method thereof**
Dichtungsmaterial und Verfahren zu seiner Herstellung
Matériau de joint et son procédé de fabrication

(30) Priority: 29.09.2006 JP 2006268748
(43) Date of publication of application: 02.04.2008
(73) Proprietor: NICHIAS CORPORATION, Chuo-ku Tokyo 104-8555 (JP)
(72) Inventor: Saito, Hiroshi, Nara (JP); Ishikawa, Kenichiro, Nara (JP)
(74) Representative: Grünecker, Kinkeldey, Stockmair & Schwanhäusser

(56) References cited:
- US-A1- 2004 195 781

## Description

### FIELD OF THE INVENTION

The present invention relates to a gasket material to be mounted on an engine for a vehicle, and a production method thereof.

### BACKGROUND OF THE INVENTION

As a gasket to be mounted on an engine for a vehicle, particularly as a head gasket, a rubber-coated stainless steel plate obtained by laminating a stainless steel plate with a rubber layer has been widely used. Further, in order to more strongly adhere the stainless steel plate to the rubber layer, there have been known a gasket material in which a chromate film comprising a chromium compound, phosphoric acid and silica is formed on one side or both sides of the stainless steel plate and the rubber layer is laminated on the chromate film (for example, see patent document 1).

Furthermore, from recent environmental problems, there is expanding the use of a gasket film obtained by forming a non-chromate film such as an organic-inorganic composite film comprising a titanium compound and a fluoride, instead of the chromate film (for example, see patent document 2).

Patent Document 1: JP-A-3-227622
Patent Document 2: JP-A-2002-264253

US-A-2004/195781 discloses a gasket material to be mounted on an engine of a vehicle, including: a metal plate; a film made from silica and a reaction product of an acid component and metal or a metallic compound; and a rubber layer formed on at least one of opposite surfaces of the metal plate through the film.

### SUMMARY OF THE INVENTION

The above-mentioned gasket material having the chromate or non-chromate film formed is excellent in heat resistance, and sufficient in antifreezing fluid resistance in the vicinity of 100°C. Accordingly, sealing property can be secured. However, when the gasket material is brought into contact with an antifreezing fluid heated to a high temperature, particularly a high temperature exceeding 170°C, adhesion property rapidly decreases.

It is therefore an object of the invention to provide a gasket material having heat resistance equivalent to or more than that of the conventional gasket material having the chromate or non-chromate film formed, being provided with resistance to an antifreezing fluid heated to a high temperature exceeding 170°C, and being free from environmental problem.

Other objects and effects of the invention will become apparent from the following description.

In view of such a conventional problem, the present inventors have made intensive studies. As a result, it was found that the above-mentioned objects can be achieved by applying a solution comprising an inorganic oxide, an acid component and a metal or a metal compound, followed by heat drying to form a film, and forming a rubber layer thereon via a primer solution comprising polybutadiene and a phenol resin.

That is, in order to achieve the above-mentioned object, the invention provides the following production methods and gasket materials.
(1) A method for producing a gasket material to be mounted on an engine for a vehicle, which comprises:
   applying a treating solution comprising an inorganic oxide, an acid component and a metal or a metal compound onto one side or both side of a steel palate, followed by heat drying to form a film in which an inorganic atom of the above-mentioned inorganic oxide is dissolved in a reaction product of the above-mentioned acid component and the above-mentioned metal or metal compound to partially form a solid solution;
   applying a primer solution comprising polybutadiene and a phenol resin dissolved in a solvent onto the above-mentioned film, followed by drying to form a primer layer; and then,
   forming a rubber layer on the above-mentioned primer layer.
(2) The method described in the above (1), wherein the inorganic oxide comprises at least one member selected from the group consisting of liquid-phase silica, vapor-phase silica, liquid-phase zirconia, vapor-phase zirconia, liquid-phase titania and vapor-phase titania.
(3) The method described in the above (1) or (2), wherein the polybutadiene comprises at least one member selected from the group consisting of a maleic-modified polybutadiene, an epoxy-modified polybutadiene, a urethane-modified polybutadiene and an acrylic-modified polybutadiene.
(4) A gasket material obtained by the production method described in any one of the above (1) to (3).

The gasket material of the invention has heat resistance equivalent to or more than that of the conventional gasket material having the chromate or non-chromate film formed, and is further provided with resistance to an antifreezing fluid heated to a high temperature exceeding 170°C. Further, the gasket material is also useful in environmental conservation and recycling efficiency, because no chromium is contained.

### DETAILED DESCRIPTION OF THE INVENTION

The invention will be illustrated below. In the invention, a treating solution comprising an inorganic oxide, an acid component and a metal or a metal compound is first applied onto a steel plate, and heat dried to form a film.

The inorganic oxide is a component for imparting heat resistance and resistance to an antifreezing fluid heated to a high temperature (hereinafter referred to as "high-temperature antifreezing fluid resistance". It is therefore preferred that the inorganic compound is homogeneously dispersed in the resulting film, and excellent in dispersibility in the treating solution. Further, it is preferred that the inorganic compound is also excellent in adhesion property with respect to the primer layer. Considering these points, the inorganic oxide is preferably liquid-phase silica, vapor-phase silica, liquid-phase zirconia, vapor-phase zirconia, liquid-phase titania or vapor-phase titania. They are used either singly or as an appropriate combination thereof. Above all, liquid-phase zirconia and vapor-phase zirconia are preferred, because of their particularly high adhesion property with respect to the primer.

The acid component is preferably phosphoric acid such as orthophosphoric acid, condensed phosphoric acid or phosphoric anhydride, acetic acid, formic acid, sulfuric acid, nitric acid, hydrofluoric acid, a fluoro complex acid, an organic acid or the like. The acid components may be used singly, but are preferably used as a mixture of two or more thereof. Reaction efficiency with the metal component increases by mixing two or more thereof to accelerate formation of a reaction product of the acid component and the metal or metal compound.

In particular, the fluoro complex acid is suitable for increasing the reaction efficiency. As the fluoro complex acid, there can be exemplified fluorotitanic acid, fluorozirconic acid, fluorosiliconic acid, fluoroaluminic acid, fluorophosphoric acid, fluorocobaltic acid, fluorosulfuric acid, fluoroboric acid and the like. Further, when the fluoro complex acid is used in combination with the other acid component, fluorotitanic acid or fluorozirconic acid is preferably used. Thereby, the reaction efficiency with the metal or metal compound is further increased.

The metal is preferably iron, zinc, nickel, aluminum, titanium, zirconium, magnesium, manganese, calcium, tungsten, cerium, vanadium, lithium, cobalt or the like. As the metal compound, there can be used an oxide, a hydroxide, a fluoride or the like of these metals. These metals and metal compounds maybe used either singly or as an appropriate combination thereof.

In particular, iron, zinc, aluminum, titanium, zirconium, and an oxide, a hydroxide and a fluoride of these metals are preferred, because reactivity with the above-mentioned acid component is high to accelerate formation of the reaction product.

As for the contents of three components (i.e., the inorganic oxide, the acid component and the metal or metal compound) in the treating solution, the content of the inorganic compound is preferably from 10 to 60% by weight, and more preferably from 30 to 50% by weight, the content of the acid component is preferably from 5 to 50% by weight, and more preferably from 10 to 30% by weight, and the content of the metal or metal compound is preferably from 1 to 30% by weight, and more preferably from 5 to 20% by weight. Adjustment to such a blending ratio gives high reaction efficiency, and makes excellent the heat resistance, the high-temperature antifreezing fluid resistance and the adhesion property with respect to the primer layer, of the resulting film.

The treating solution is obtained by dispersing or dissolving the inorganic oxide, the acid component and the metal or metal compound in an appropriate solvent. As the solvent, water is preferred because of its low cost and excellent handleability. There in no limitation on the total content of the inorganic oxide, the acid component and the metal or metal compound in the treating solution, and adjustment is made to a concentration suitable for coating. When the amount of the solvent is too large, it takes a long period of time to perform heat drying. On the other hand, when the amount of the solvent is too small, coating properties deteriorate. Accordingly, for example, when water is used as the solvent, the amount of water is suitably adjusted to 10 to 60% by weight of the total amount of the treating solution.

There is no limitation on a coating method of the treating solution, and any known coating means such as a roll coater can be used.

The treating solution applied is dried usually at a temperature of 150 to 250°C. During this heat drying, the acid component reacts with the metal or metal compound, and further, an inorganic atom of the inorganic oxide is dissolved in the reaction product to partially form a solid solution. Thus, a film comprising a composite material thereof is formed. That is, the composite material becomes a state in which part of a crystal lattice of the reaction product is replaced by the inorganic atom. The amount of the film is not limited, but practically, it is suitably from 50 to 1,000 mg/m².

In the invention, there is no limitation on the kind of steel plate, and there can be used a stainless steel plate (ferrite-based/martensite-based/austenite-based stainless steel plate), an iron steel plate, an aluminum steel plate and the like.

Then, the primer layer is formed on the above-mentioned film. The primer layer is obtained by applying a primer solution comprising polybutadiene and a phenol resin dissolved in a solvent onto a surface of the above-mentioned film, followed by heat drying.

The polybutadiene includes polybutadiene, a hydrogenation type polybutadiene and a modified polybutadiene, and a modified polybutadiene is preferred because of high adhesion property with respect to the above-mentioned film. As specific examples thereof, there can be preferably used a maleic-modified polybutadiene, an epoxy-modified polybutadiene, a urethane-modified polybutadiene and an acrylic-modified polybutadiene. Further, as the phenol resin, both of a novolak type and a resol type can be used. The polybutadienes and the phenol resins may each be used either singly or as an appropriate combination thereof. In particular, when importance is attached to adhesion to the above-mentioned film, the resol type phenol resin is used. On the other hand, when importance is attached to adhesion to a rubber layer, the novolak type phenol resin is used.

As for the blending ratio of the polybutadiene and the phenol resin in the primer solution, the ratio of the polybutadiene is preferably from 5 to 50% by weight, and more preferably from 10 to 30% by weight, and the ratio of the phenol resin is preferably from 50 to 95% by weight, and more preferably from 70 to 90% by weight.

Further, a coupling agent may be incorporated in the primer solution, and the amount thereof incorporated is preferably from 0.5 to 20% by weight based on the total amount (solid content) of the polybutadiene and the phenol resin. There is no limitation on the total content of polybutadiene and the phenol resin in the primer solution, and adjustment is made to a concentration suitable for coating. When the amount of the solvent is too large, it takes a long period of time to perform drying. On the other hand, when the amount of the solvent is too small, coating properties deteriorate. The amount of the solvent is suitably from 83 to 95% by weight.

There is no limitation on a coating method of the primer solution, and any known coating means such as a roll coater can be used.

The primer solution applied is dried usually at a temperature of 150 to 250°C. During this drying, the resulting primer layer is firmly adhered to the above-mentioned film. There is no limitation on the film thickness of the primer layer, but practically, it is suitably from 1 to 10 µm.

Then, a rubber layer is formed on the primer layer to accomplish the gasket material of the invention. Rubber for forming the rubber layer may be any known one, but is suitably NBR, fluorocarbon rubber, silicone rubber, acrylobutadiene rubber, HNBR, EPDM or the like, which is excellent in heat resistance and chemical resistance. Furthermore, for the formation of the rubber layer, a rubber solution or latex obtained by dissolving a rubber material in an appropriate solution may be applied to a thickness of 20 to 130 µm by means of a skimmer coater or a roll coater, followed by curing adhesion at a temperature of 150 to 250°C.

The gasket material of the invention obtained as described above is excellent in heat resistance and also in high-temperature antifreezing fluid resistance. This is assumed to be due to the following actions.

As damages applied to a head gasket of an engine at the time of driving, there are conceivable (1) adhesion fracture between rubber and a steel plate caused by penetration of an antifreezing fluid into a rubber layer and (2) adhesion fracture between rubber and a steel plate caused by combustion heat. In order to prevent such fracture, a chromate film or a non-chromate film has been allowed to intervene between the steel plate and the rubber layer (or the primer layer). However, the antifreezing fluid heated to a high temperature in the vicinity of combustion gas easily penetrates into the rubber layer to fracture adhesion between the rubber and the steel plate. Accordingly, in order to maintain adhesion even when the antifreezing fluid is heated to a high temperature, it is necessary that both the film and the primer layer are stable in structure even when exposed to the antifreezing fluid of a high temperature, that the primer layer itself is hard to be penetrated by the antifreezing fluid, and that adhesion strength between the film and the primer layer is high. In the invention, the mixture of the polybutadiene and the phenol resin, which shows high-temperature antifreezing fluid resistance, is used in the primer layer, and further, as a primary coat therefor, there is provided the film in which an inorganic atom of the inorganic oxide is dissolved in a reaction product of the acid component and the metal or metal compound to partially form a solid solution, thereby increasing the adhesion strength of the primer layer. That is, the adhesion strength under the antifreezing fluid at a high temperature of 170°C or higher is increased by the following actions (1) to (3).
(1) The polybutadiene or modified polybutadiene contained in the primer layer increases the resistance of the primer layer to the antifreezing fluid.
(2) The polybutadiene or modified polybutadiene and the phenol resin are firmly adhered to the inorganic compound in the film.
(3) The reaction product of the acid component and the metal or metal compound is not decomposed by the antifreezing fluid of a high temperature, and the adhesion to the steel plate is firmly maintained.

### EXAMPLES

The present invention will be illustrated in greater detail with reference to the following examples and comparative examples, but invention should not be construed as being limited thereto.

### (Preparation of Sample)

A treating solution having a formulation shown in Table 1 was applied onto both sides of a stainless steel plate by means of a roll coater, and the coated film was dried at 180°C to form a film. By the way, the amount of the film was within the range of 50 to 90 mg/m². Then, a primer solution having a formulation shown in Fig. 1 was applied onto the film or the stainless steel plate (Comparative Example 1), and the coated film was dried to form a primer layer. Then, a solution obtained by dissolving nitrile rubber in a solvent was applied onto the primer layer by means of a roll coater, followed by curing adhesion at 180 °C for 10 minutes to form a rubber layer, thereby preparing a sample.

### (Evaluations)

### 1. Resistance to High-Temperature Antifreezing Fluid

The sample prepared above was immersed in a car radiator coolant (Toyota Genuine Long Life Coolant) perpendicularly to a liquid level thereof, and allowed to stand at a liquid temperature of 170°C for 500 hours. Then, the sample was taken out of the coolant, and subjected to the following cross-cut peel test and drawing test.

### 1.1 Cross-Cut Peel Test

The test was made by the following procedure based on JIS-K5400.
(1) Both surfaces of the sample are cross-cut in a grid form at 2 mm intervals so as to form 100 cross cuts.
(2) A pressure-sensitive adhesive tape is attached onto the cross cuts, and completely adhered by rubbing the tape with an eraser.
(3) One or two minutes after the tape adhesion, the pressure-sensitive adhesive tape is instantaneously peeled off in a direction perpendicular to the surface of the sample by holding one end of the tape.
(4) The surface of the sample after peeling is observed, and the remaining number of the cross cuts is counted.

The results thereof are shown in the column of "Cross-Cut Peel Test" under "High-Temperature Antifreezing Fluid Resistance" in Table 2. The numerical values on the left and right of symbol "/" in the column represent the remaining numbers on the respective surfaces (front surface/back surface). For example, "100" indicates that no separation occurred when the tape was peeled off, and "50" indicates that half 50 cross cuts was separated.

### 1.2 Drawing Test

A spiral with a radius of 4.5 mm was drawn 25 times on one surface of the sample by using a drawing tester specified in JIS-K6894, and the sample was evaluated by the following criteria. The results thereof are shown in the column of "Drawing Test" under "High-Temperature Antifreezing Fluid Resistance" in Table 2.

### <Evaluation Criteria>

5: The rubber layer completely remains.
4: The rubber layer partially drops out.
3: About a half of the rubber layer drops out.
2: The rubber layer slightly remains.
1: The rubber layer completely drops out.

### 2. Heat Resistant Adhesion

The sample prepared was allowed to stand with heating at 200°C for 500 hours, and then, the cross-cut peel test was performed in the same manner as described above. The results thereof are shown in the column of "Heat Resistance" in Table 2.

**Table 1**

| | Treating Solution | | | | | | | Primer Solution | | | | |
|---|---|---|---|---|---|---|---|---|---|---|---|---|
| | Metal Component | | Inorganic Particles | | Acid Component | | Water | Polybutadiene | | Phenol Resin | | Coupling Agent |
| | Kind | Content | Kind | Content | Kind | Content | Content | Kind | Content | Kind | Content | Content |
| Example 1 | Aluminum | 15% | Liquid-phase silica | 30% | Phosphoric acid | 30% | 25% | Polybutadiene | 20% | Novolak | 70% | 10% |
| Example 2 | Titanium | 16% | Vapor-phase silica | 40% | Phosphoric acid | 20% | 11% | Maleicmodified polybutadiene | 20% | Novolak | 35% | 10% |
| | Zirconium | 3% | | | Hydrofluoric aad | 10% | | | | Resol | 35% | |
| Example 3 | Titanium | 16% | Liquid-phase zirconia | 40% | Phosphoric acid | 20% | 11% | Urethanemodified polybutadiene | 10% | Novolak | 50% | Not contained |
| | Zirconium | 3% | | | Fluorozirconic acid | 10% | | | | Resol | 40% | |
| Example 4 | Zinc | 3% | Vapor-phase titania | 40% | Phosphoric acid | 20% | 20% | Acrylicmodified polybutadiene | 7% | Resol | 85% | 8% |
| | Nickel | 7% | | | Acetic add | 10% | | | | | | |
| Examples 5 | Tungsten | 12% | Vapor-phase zirconia | 20% | Nitric acid | 25% | 43% | Polybutadiene | 20% | Novolak | 70% | 10% |
| Example 6 | Iron | 15% | Liquid-phase titania | 25% | Formic acid | 20% | 40% | Polybutadiene | 20% | Novolak | 70% | 10% |
| Comparative Example 1 | Aluminum | 15% | Liquid-phase silica | 30% | Phosphoric acid | 30% | 25°% | Not contained | | Novolak | 100% | Not contained |
| Comparative Example 2 | Not contained | | | | | | | Maleicmodfied polybutadiene | 20% | Novolak | 35% | 10% |
| | | | | | | | | | | Resol | 35% | |
| Comparative Example 3 | Iron | 15% | Not contained | | Acetic add | 20% | 65% | Polybutadiene | 20% | Novolak | 70% | 10% |
| Comparative Example 4 | Calcium | 3% | Vapor-phase titania | 40% | Not contained | | 50% | Epoxymodified polybutadiene | 10% | Novolak | 40% | 5°% |
| | Nickel | 7% | | | | | | | | Resol | 45% | |
| Comparative Example 5 | Chromate solution | | | | | | | Not contained | | Novolak | 100% | Not contained |
| Comparative Example 6 | Chromate solution | | | | | | | Polybutadiene | 20% | Novolak | 70% | 10% |

**Table 2**

| | High-Temperature Antifreezing Fluid Resistance | | Heat Resistance |
|---|---|---|---|
| | 170°C×250 Hr | | |
| | Cross-Cut Peel Test | Drawing Test | Cross-Cut Peel Test |
| Example 1 | 100/100 | 5 | 100/100 |
| Example 2 | 100/100 | 5 | 100/100 |
| Example 3 | 100/100 | 5 | 100/100 |
| Example 4 | 100/100 | 5 | 100/100 |
| Example 5 | 100/100 | 5 | 100/100 |
| Example 6 | 100/100 | 5 | 100/100 |
| Comparative Example 1 | 30/50 | 2 | 100/100 |
| Comparative Example 2 | 20/10 | 2 | 100/100 |
| Comparative Example 3 | 5/8 | 1 | 100/100 |
| Comparative Example 4 | 45/30 | 2 | 100/100 |
| Comparative Example 5 | 25/15 | 1 | 100/100 |
| Comparative Examp le 6 | 40/30 | 1 | 100/100 |

As indicated in Table 2, it is shown that all the samples of Examples 1 to 6 according to the invention have good heat resistance equivalent to that of the chromatetreated samples, and are remarkably excellent in high-temperature antifreezing fluid resistance.

This application is based on Japanese Patent Application No. 2006-268748 filed September 29, 2007.

## Claims

1. A method for producing a gasket material to be mounted on an engine for a vehicle, which comprises:
applying a treating solution comprising an inorganic oxide, an acid component and a metal or a metal compound onto one side or both side of a steel palate, followed by heat drying to form a film in which an inorganic atom of said inorganic oxide is dissolved in a reaction product of said acid component and said metal or metal compound to partially form a solid solution;
applying a primer solution comprising polybutadiene and a phenol resin dissolved in a solvent onto said film, followed by drying to form a primer layer; and then,
forming a rubber layer on said primer layer.

2. The method according to claim 1, wherein the inorganic oxide comprises at least one member selected from the group consisting of liquid-phase silica, vapor-phase silica, liquid-phase zirconia, vapor-phase zirconia, liquid-phase titania and vapor-phase titania.

3. The method according to claim 1 or 2, wherein the polybutadiene comprises at least one member selected from the group consisting of a maleic-modified polybutadiene, an epoxy-modified polybutadiene, a urethane-modified polybutadiene and an acrylic-modified polybutadiene.

4. A gasket material obtained by the production method according to any one of claim 1 to 3.

## Patentansprüche

1. Verfahren zum Herstellen eines Dichtungsmaterials, das an einem Motor für ein Fahrzeug angebracht werden soll, welches umfasst:
das Aufbringen einer Behandlungslösung, umfassend ein anorganisches Oxid, eine Säurekomponente und ein Metall oder eine Metallverbindung, auf eine Seite oder beide Seiten von einer Stahlplatte, gefolgt von Trocknen mittels Wärme, um einen Film zu bilden, in dem ein anorganisches Atom des anorganischen Oxids in einem Reaktionsprodukt von der Säurekomponente und dem Metall oder der Metallverbindung gelöst ist, um teilweise eine feste Lösung zu bilden;
das Aufbringen einer Grundiermittellösung, umfassend Polybutadien und ein Phenolharz gelöst in einem Lösungsmittel, auf den Film, gefolgt von Trocknen, um eine Grundiermittelschicht zu bilden; und anschließend
das Bilden einer Kautschukschicht auf der Grundiermittelschicht.

2. Verfahren nach Anspruch 1, wobei das anorganische Oxid wenigstens ein Mitglied, ausgewählt aus der Gruppe bestehend aus Flüssigphasensiliciumdioxid, Dampfphasensiliciumdioxid, Flüssigphasenzirkoniumdioxid, Dampfphasenzirkoniumdioxid, Flüssigphasentitandioxid und Dampfphasentitandioxid, umfasst.

3. Verfahren nach Anspruch 1 oder 2, wobei das Polybutadien wenigstens ein Mitglied, ausgewählt aus der Gruppe bestehend aus einem Maleinsäure-modifizierten Polybutadien, einem Epoxy-modifizierten Polybutadien, einen Urethan-modifizierten Polybutadien und einem Acryl-modifizierten Polybutadien, umfasst.

4. Dichtungsmaterial erhalten durch das Herstellungsverfahren nach einem der Ansprüche 1 bis 3.

## Revendications

1. Procédé de production d'un matériau de joint à monter sur un moteur pour un véhicule, qui comprend les étapes consistant à :
appliquer une solution de traitement comprenant un oxyde inorganique, un composant acide et un métal ou un composé métallique sur un côté ou les deux côtés d'une plaque en acier, puis sécher à la chaleur pour former un film dans lequel un atome inorganique dudit oxyde inorganique est dissous dans un produit réactionnel dudit composant acide et dudit métal ou composé métallique pour former partiellement une solution solide ;
appliquer une solution d'apprêt comprenant du polybutadiène et une résine phénolique dissous dans un solvant sur ledit film, puis sécher pour former une couche d'apprêt ; puis
former une couche de caoutchouc sur ladite couche d'apprêt.

2. Procédé selon la revendication 1, dans lequel l'oxyde inorganique comprend au moins un élément choisi dans le groupe constitué par une silice en phase liquide, une silice en phase vapeur, une zircone en phase liquide, une zircone en phase vapeur, un dioxyde de titane en phase liquide et un dioxyde de titane en phase vapeur.

3. Procédé selon la revendication 1 ou 2, dans lequel le polybutadiène comprend au moins un élément choisi dans le groupe constitué par un polybutadiène modifié par de l'acide maléique, un polybutadiène modifié par un époxyde, un polybutadiène modifié par un uréthane et un polybutadiène modifié par un acide acrylique.

4. Matériau de joint obtenu par le procédé de production selon l'une quelconque des revendications 1 à 3.
